Europäisches Patentamt

European Patent Office

Office européen des brevets

(11) Publication number: **0 414 409 A2**

# EUROPEAN PATENT APPLICATION

(21) Application number: **90308679.1**

(22) Date of filing: **07.08.90**

(51) Int. Cl.5: **H04M 1/72**

The title of the invention has been amended (Guidelines for Examination in the EPO, A-III, 7.3).

(30) Priority: **23.08.89 GB 8919188**

(43) Date of publication of application:
**27.02.91 Bulletin 91/09**

(84) Designated Contracting States:
**AT BE CH DE DK ES FR GB GR IT LI LU NL SE**

(71) Applicant: **FERRANTI CREDITPHONE LIMITED**
**St. Mary's Road**
**Moston, Manchester M10 OBE(GB)**

(72) Inventor: **Aspin, Gordon James,**
**17 High Ditch Road, Fen Ditton**
**Cambridge CB5 8TE(GB)**
Inventor: **Creedy, Michael Dennis,**
**6 Quintrel Avenue, Fareham**
**Hampshire PO16 9TE(GB)**

(74) Representative: **Morton, Colin David et al**
**Keith W Nash & Co. Pearl Assurance House**
**90-92 Regent Street**
**Cambridge CB2 1DP(GB)**

(54) Cordless telephone systems.

(57) A cordless telephone system has a plurality of base stations (10,12) communicating with portable handsets (14,15,18) by burst mode duplex, ie alternate periods of transmission and reception. Synchronisation between two adjacent base stations is achieved by means at one station which determine the relative phases of the transmit/receive bursts at the two stations and alter the frequency of the burst clock at the one station.

EP 0 414 409 A2

## TELEPHONE SYSTEMS

### Field of the Invention

This invention relates to telephone systems and in particular to telephone systems having base stations and handsets which communicate by burst mode duplex, that is alternating bursts of transmission and reception.

### Background to the Invention

The invention has particular application to cordless telephone systems, where the handsets are portable and the base stations are commonly called Telepoints. One particular class of telephones, shortly to be launched in the UK and called "CT2" (cordless telephone, second generation) uses the same radio channel for both transmission and receptionl with the two radios at the ends of the communications link alternately transmitting a burst of information.

Recent research suggests that the traffic density achievable in a telepoint system may be severely limited if burst synchronisaton between base stations is not employed. This synchronisation, to ensure that the base station (and hence handset) transmissions do not block each other, is not automatically a feature of known systems; indeed, as currently envisaged the base stations are entirely autonomous and have no constraints on location. Nevertheless, it is desirable to consider means by which burst synchronisation may be achieved amongst a group of adjacent base stations. The aim of the present invention is to provide synchronisation of base stations, while making use of the existing air interface signal structure. Operating handsets work in synchronism with the base station with which they are in communication, so synchronisation of the base stations also synchronises any communicating handsets.

Other approaches not based around the air interface structure can be envisaged: for base stations in close physical proximity a wire link may be employed to carry the synchronisation signals. This, however, is unattractive for base stations sited more than a few metres appart. Further schemes might make use of common timing signals which can be received at all base stations, for example line and frame synchronisation signals broadcast by local, national or satellite TV stations, or the broadcast national time standard. All these schemes, however, are open to critisism as not being solutions with generic application. The invention therefore relies on the existing air interface.

### Summary of the Invention

According to the invention means for synchronising the operation of two adjacent base stations in a burst mode duplex telephone system in which the base stations communicate with handsets in alternate periods of transmission and receptionl comprises means located at at least one base station for determining the relative phases of the transmit/receive bursts at the two stations and means at said one base station for bringing the phases into or towards synchronism.

The means for detecting the relative phases is preferably operative during successive windows of time which exclude the transmit bursts at said one base station, because the power output during the transmit bursts precludes detection of the transmit/receive bursts of the other base station.

The transmit/receive bursts at each base station are normally separated by guard times, there being a first guard time between the termination of each transmit burst and the commencement of the ensuing receive burst, and a second guard time (different from the first guard time) between the termination of each receive burst and the commencement of the ensuing transmit burst. The means for detecting the relative phases preferably detects the relative phases of these guard times because this provides an unambiguous indication of relative phase even if the two adjacent base stations are in anti-phase (the worst case for detection) and even if (as is usual) the transmit and receive bursts have the same duration.

The detection of the relative phases of the guard times is preferably carried out by detecting, in each time window, the transition between the transmit and receive bursts and the duration of the guard times of the other base station, these two pieces of informaton providing an unambiguous indication of the phase of the other base station relative to the phase of said one base station.

In a practical system said one base station will detect the phases of a plurality of adjacent base stations, and the means at one said base station for bringing the phases into synchronism will preferably evaluate the mean phases of all other operating base stations and pull the phase of said one base station towards the mean phase by pulling of the burst clock at said one base station.

The invention will now be further described by way of example, with reference to the accompanying drawings in which:

Figure 1 shows a telephone system comprising two adjacent base stations and associated portable handsets,

Figure 2 shows two alternative burst timing systems,

Figure 3 illustrates in-phase and anti-phase conditions as seen in a viewing window at one base station, and

Figure 4 illustrates a control loop for achieving burst synchronisation of the two base stations.

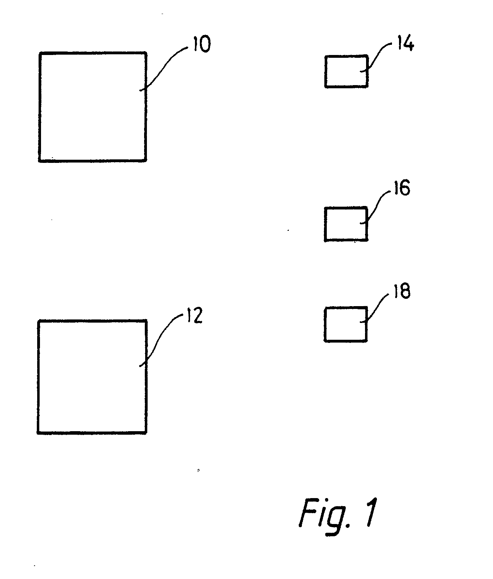

Referring to Figure 1, two base stations 10 and 12 are adjacent and each is capable of communicating with portable handsets 14, 16, 18 etc. Radio communication between base station and handset is by burst mode duplex, that is alternate periods of transmission and reception on a common radio channel.

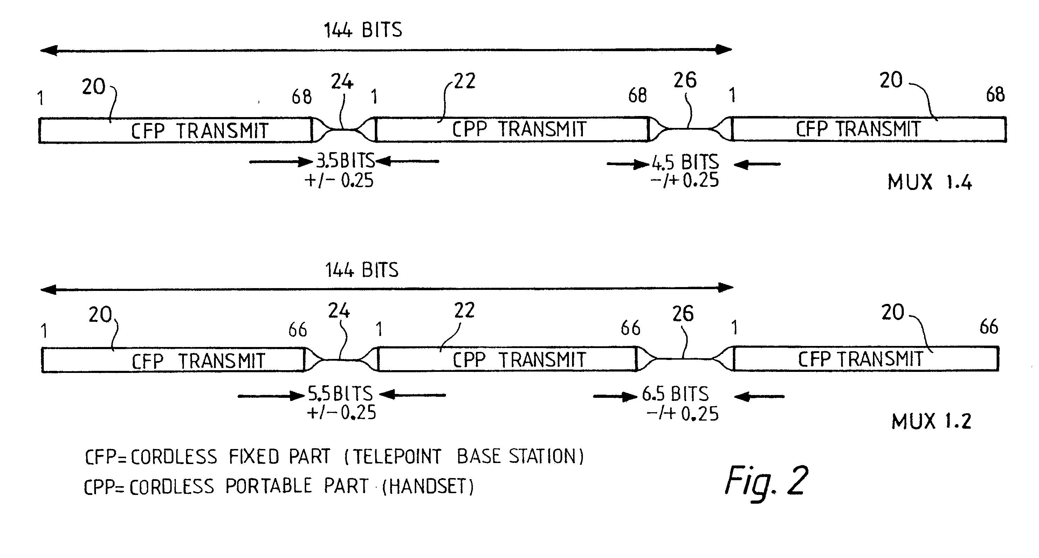

The burst structure for a common air interface telepoint radio system in full communications mode is shown in Figure 2. Two multiplexes are illustrated. In the lower multiplex (MUX1.2) the transmit burst 20 occupies 66 bits of the 144 bit frame and the receive burst 22 occupies a further 66 bits of the 144 bit frame. A first guard time 24 (of 5.5 bits) is interposed between the end of each transmit burst 20 and the commencement of the ensuing receive burst 22, and a second guard time 26 (of 6.5 bits) is interposed between the termination of each receive burst 22 and the commencement of the ensuing transmit burst 20. It will be appreciated that the terms transmit and receive are used in relation to a reference base station and that during each transmit burst 20 a communicating handset is receiving and during each receive burst 22 a communicating handset is transmitting. It should be noted that all timing is driven by the burst mode clock at the base station but the timings are as seen at the handset aerial.

In the multiplex shown in the upper part of Figure 2 (MUX1.4) each transmit burst 20 occupies 68 bits, each receive burst 22 occupies 68 bits, each first guard time 24 occupies 3.5 bits and each second guard time 26 occupies 4.5 bits.

As seen off air, the amplitude of the radio frequency signals is not stepped sharply at the transitions of the bursts: to avoid amplitude modulation splash, the radio frequency amplitude is ramped up and down smoothly over a period of time typically of the order of 1 bit, as illustrated in Figure 2.

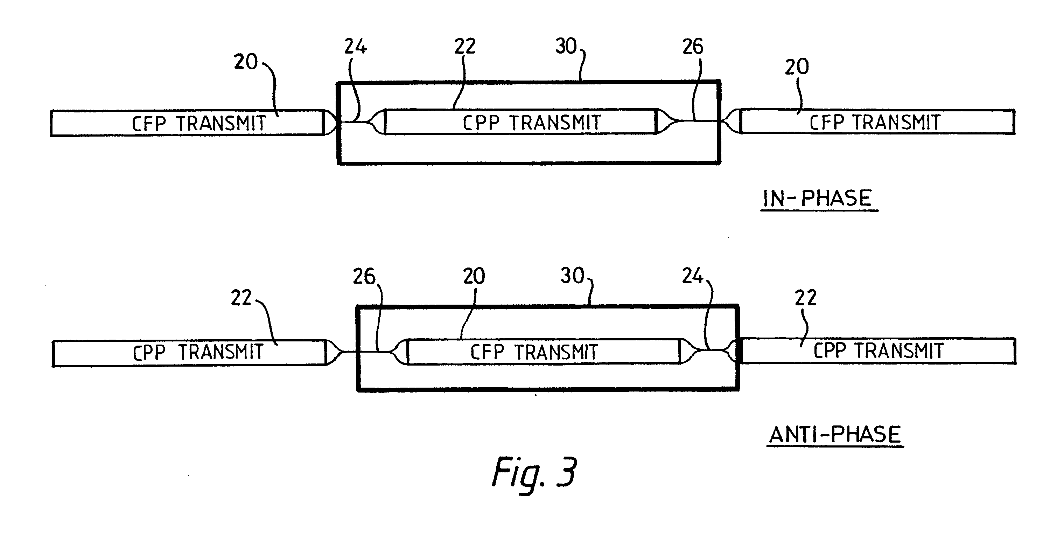

To ensure continuous synchronisation, each base station must be able to scan the 40 operating channels allocated to the service even when the base station is in use with a call in progress. This requirement necessitates a scanning receiver at each base station in addition to the telepoint transceivers already in place. Assuming that the receiver makes use of the existing antenna (or antennas for a system with diversity), then the receiver will be blocked during the base station transmit bursts. Hence, the scanning receiver will only be able to view the other base stations during the receive bursts of the reference base station, ie for a period of approximately 1 millisecond in every two milliseconds. Hence, the reference base station can monitor the phases of the adjacent base stations during successive windows of time corresponding to the periods during which the reference base station is not transmitting, as subsequently explained with reference to Figure 3.

In order to detect burst phase a carrier amplitude measurement is performed, looking for the cross-over point between each transmit burst 20 and the following receive burst 22. At the same time a measurement of the guard times 24, 26 between RF bursts is performed (at, for example, the - 6dB points in the signal waveforms). The accuracy of both these measurements may be enhanced by linking them to a measurement of the carrier frequency zero crossing points (the bit boundaries). This information is already present within the symbol timing recovery section of the receiver.

The phase of the off-air signals relative to the base station timing may then be estimated, using the different guard times 24, 26 as a means of distinguishing transmit bursts 20 from receive bursts 22. Note that propagation times in free space alter these timings by less than 0.1 bits (assuming ranges up to 150m).

One potential problem area concerns when the timing of an external signal is in phase or anti-phase with the internal timing. Under these conditions, the phase can be estimated, but there is potential ambiguity between transmit and receive bursts. However, when we view the signals seen by the base station under such conditions, it is clear from Figure 3 that the guard times are always distinguishable.

In Figure 3 we show the base terminal viewing window 30 for in-phase (upper diagram) and anti-phase (lower diagram) synchronisation. In both cases the window 30 is aligned to open a few bits before bit 1 of the appropriate burst, but in the upper diagram we are viewing receive burst 22 whereas in the lower diagram we view the transmit burst 20. The window 30 is viewing the signals from another adjacent base station.

The actual number of bits between the window opening and bit 1 is given by the guard band 24 (3.5 bits in MHX1.4) less the transition time ramp (typically 1 bit), ie approximately 2.5 bits. the window width is given by the guard length (144 bits) minus the transmit burst length (68 bits in MUX1.4) minus the ramp up and ramp down times (1 bit each typically) ie approximately 74 bits.

As can be seen from Figure 3, the whole of the transmit burst ramp-up is visible when the window is in anti-phase synchronisation; whereas when in true phase synchronisation, none of the ramp period is visible. This analysis is independent of ramp up and down times, providing these times are constant. Given the +/- 0.25 bits tolerance on the burst start, then up to 0.5 bits of the ramp may be obscured in practice; however, as ramp times are typically 1 bit or more, this technique is still valid to distinguish the false synchronisation condition.

The strategy that is proposed for burst synchronisation consists of three operations:

1 Scan round all 40 channels (except those being used by the base station itself) and measure the phase of all base station transmissions relative to your own reference base station.

2 Evaluate the mean phase of all transmissions.

3 Pull the reference base station burst phase towards the mean phase.

The mean phase is evaluated by taking the vector sum of all the transmissions (including one's own reference transmissions) possibly with weightings based on the receive signal strength.

Having evaluated the mean phase, the driving of the base station burst phase is achieved by pulling of the base station burst clock. The maximum rate of change of phase is limited by the CAI frequency stability specification of ± 50 ppm max.

The issue of delays within the synchronisation loop is important to guarantee loop stability. If we assume that we wish to synchronise base stations to within 1 bit, then at the maximum clock pulling rate it will take approximately 280ms to regain synchronisation after a 1 bit slip. For a stable system we must have scanned around the 40 channels in this time and measured all phases, ie the phase measurement plus channel jump time must take 7ms maximum. This timing is not unreasonable.

A further issue in synchronisation concerns the clock stability question. The base station free running stability must be an order of magnitude better than the allowable pulling rate to avoid the situation where base stations are chasing a 'rogue' station which is drifting at the maximum pulling rate. This means that base stations should be designed with say 10ppm or better stability with ± 40ppm available for synchronisation.

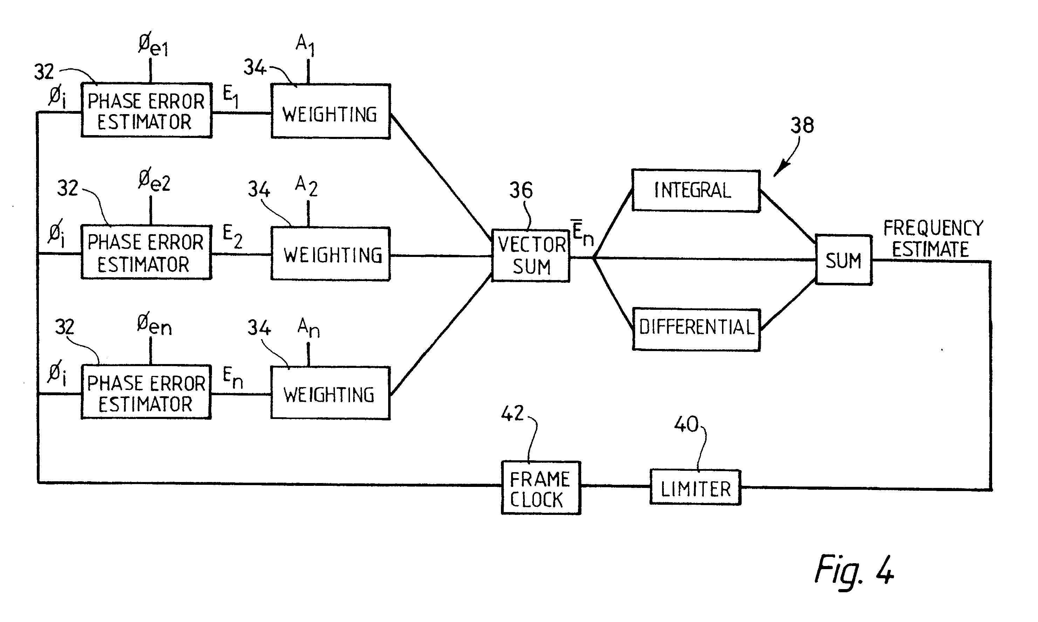

The stability of the loop formed by the network of base stations may be analysed as a problem in control theory; and in accordance with such theory a PID (proportional -integral - derivative) type controller is likely to be optimum (see Figure 4). Simulations indicate that a pure proportional controller is stable under most simple Telepoint configurations; however, it is possible to conceive of loosely coupled arrangements where synchronisation is not achieved using such techniques. Under these situations, the inclusion of integral control should stabilise the network, albeit slowly.

In Figure 4 the phases of other base stations are shown as $\phi ei$, $\phi e2$, $\phi en$ respectively forming inputs to phase error estimators 32, to the outputs of which are applied weighting factors $A_1$, $A_2$, $A_n$ in multipliers 34. The outputs of the multipliers are summed as vectors in summer 36, the output fed to an integral/differential network 38 which produces a frequency estimate fed back via a limiter 40 to the burst frame clock 42. The adjusted frame clock phase forms a reference for the estimators 32.

The preferred embodiment thus employs a burst synchronisation technique making use of off-air signals and a synchronisation algorithm to lock together the burst phases of the base stations. Such a scheme is likely to improve the traffic handling capacity of base stations located in close proximity.

## Claims

1. Means for synchronising the operation of two adjacent base stations in a burst mode duplex telephone system in which the base stations communicate with hand sets in alternate periods of transmission and reception, comprising means located at at least one base station for determining the relative phases of the transmit/receive bursts at the two stations and means at said one base station for bringing the phases into or towards synchronism.

2. Means according to claim 1, wherein the means for detecting the relative phases is operative during successive windows of time which exclude the transmit bursts at said one base station.

3. Means according to claim 1 or 2, wherein the transmit/receive bursts at each base station are separated by guard times, there being a first guard time between the termination of each transmit burst and the commencement of the ensuing receive burst, and a second guard time, different from the first guard time, between the termination of each receive burst and the commencement of the ensuing transmit burst, said means for detecting the relative phases detecting the relative phases of these guard times to provide an unambiguous indication of relative phase.

4. Means according to claim 3, wherein the detection of the relative phases of the guard times is carried out by detecting, in each time window the transition between the transmit and receive bursts and the duration of the guard times of the other base station, these two pieces of informaton providing an unambiguous indication of the phase of the other base station relative to the phase of said one base station.

5. Means according to any of the preceding claims, wherein said one base station detects the phases of a plurality of adjacent base stations, and the means at one said base station for bringing the phases into synchronism evaluates the mean phases of all other operating base stations and pulls the phase of said one base station towards the mean phase by adjustment in the frequency of a burst clock at said one base station.

*Fig. 1*

144 BITS

| | | | | | | | |
|---|---|---|---|---|---|---|---|
| 1 | 20 | 68 | 24 | 1 | 22 | 68 | 26 | 1 | 20 | 68 |

| CFP TRANSMIT | CPP TRANSMIT | CFP TRANSMIT |

3.5 BITS
+/- 0.25

4.5 BITS
-/+ 0.25

MUX 1.4

144 BITS

| 1 | 20 | 66 | 24 | 1 | 22 | 66 | 26 | 1 | 20 | 66 |

| CFP TRANSMIT | CPP TRANSMIT | CFP TRANSMIT |

5.5 BITS
+/- 0.25

6.5 BITS
-/+ 0.25

MUX 1.2

CFP = CORDLESS FIXED PART (TELEPOINT BASE STATION)
CPP = CORDLESS PORTABLE PART (HANDSET)

*Fig. 2*

EP 0 414 409 A2

EP 0 414 409 A2

| 24 | 22 | 30 | 26 |
| 20 | | | | 20 |

CFP TRANSMIT    CPP TRANSMIT    CFP TRANSMIT

IN-PHASE

| 26 | 20 | 30 | 24 |
| 22 | | | | 22 |

CPP TRANSMIT    CFP TRANSMIT    CPP TRANSMIT

ANTI-PHASE

*Fig. 3*

Fig. 4

EP 0 414 409 A2